# EUROPÄISCHE PATENTSCHRIFT

(11) **EP 0 770 538 B1**
(45) Veröffentlichungstag und Bekanntmachung des Hinweises auf die Patenterteilung: **14.08.2002**
(21) Anmeldenummer: 96116845.7
(22) Anmeldetag: 19.10.1996
(51) Int. Cl.: B62D 3/12

(54) **Zahnstangengetriebe**
Rack and pinion gear
Engrenage à pignon et crémaillère

(30) Priorität: 26.10.1995 DE 19539864
(43) Veröffentlichungstag der Anmeldung: 02.05.1997
(73) Patentinhaber: TRW Fahrwerksysteme GmbH & Co. KG, 40547 Düsseldorf (DE)
(72) Erfinder: Heep, Theo Dipl.-Ing., 47800 Krefeld (DE)
(74) Vertreter: Stenger, Watzke & Ring Patentanwälte

(56) Entgegenhaltungen:
- DE-A- 2 409 938
- US-A- 4 218 933

## Beschreibung

Die Erfindung betrifft ein Zahnstangengetriebe mit einem Getriebegehäuse, in welchem in einer Bohrung eine durch ein in einem Ritzelgehäusebereich angeordnetes Ritzel beaufschlagte Zahnstange geführt ist, wobei die Bohrung im Eingriffsbereich von Ritzel und Zahnstange exzentrisch erweitert ist und ein Keillagerelement in den Eingriffsbereich eingesetzt ist.

Zahnstangengetriebe der gattungsgemäßen Art sind bekannt. Bei einem Lenkgetriebe einer Zahnstangenlenkung wird ein Wellenlager insbesondere dort benötigt, wo die Zahnstange mit dem Ritzel eines Servolenkventils im Eingriff steht. An dieser Stelle wird über das Ritzel auf die Zahnstange eine radiale Kraft ausgeübt, so daß die die Welle bildende Zahnstange an der anderen Seite gegengelagert werden muß.

Aus der DE 43 02 309 A1 ist ein derartiges Wellenlager bekannt, welches in Form eines sogenannten Druckstückes ausgebildet ist. Das Gehäuse weist eine zur Wellenlängsachse radial verlaufende Bohrung auf, die einen Aufnahmetopf bildet. In dieser Bohrung ist ein Druckstück, meistens ein Kunststoffelement, eingesetzt. Einerseits wird das Druckstück durch eine Feder belastet und der Gehäusetopf verschlossen, andererseits muß der Gehäusetopfverschluß auch leckagedicht sein. Der Arbeitsbereich des Druckstückes wird mit unterschiedlichsten Temperaturen beaufschlagt. Die meistens aus einem Polyoxymethylen gebildeten Druckstücke müssen mit Spiel eingesetzt werden, um einerseits die Wärmeausdehnung speziell des Druckstückes zu gewährleisten und andererseits die Krümmung der Zahnstange zu kompensieren. Durch das erforderliche Spiel neigen diese vorbekannten Wellenlager zum Klappern. Es werden neben dem Druckstück selbst eine Reihe von Bauteilen benötigt, nämlich eine Feder, ein Schraubdeckel und ein O-Ring zum Abdichten, und es muß das Gehäuse mit einem zusätzlichen Radialtopf versehen werden.

Um derartige Lenkgetriebe, insbesondere die Wellenlagerbereiche zu vereinfachen, wird in den DE-OS 26 57 289, 26 57 290 und 29 34 275 ein wannen- bzw. halbschalenartiges, federbelastetes Unterstützungsstück vorgeschlagen. Dieses wird im Gegenlagerbereich zusammen mit der Feder eingesetzt und übt einen Gegendruck auf die Welle bzw. auf die Zahnstange aus.

Aus der DE-AS 24 09 938 ist ein Zahnstangengetriebe gemäß dem Oberbegriff des Anspruchs 1 bekannt, mit einer keilförmigen Andruckvorrichtung, welche im Gleitkontakt mit einem Bogenbereich der abgerundeten Rückseite der Zahnstange steht und den übrigen Teil der Zahnstange frei umgibt und drehbar in einem Ende des Ritzelgehäuses gelagert ist, wobei das vorbekannte rohrförmige Keillager in seiner Andruckstellung mit dem Ritzelgehäuse durch ein Eindrücken verriegelt ist. Die Druckschrift offenbart darüberhinaus, das Andruckstück unter Verwendung von Federmitteln exakt zu positionieren.

Ein Problem dieser Ausführungsformen besteht in der radialen und in der axialen Positionierung und Fixierung der Unterstützungselemente. Darüber hinaus werden ebenfalls Bauteile unterschiedlicher Wärmeausdehnung verwendet und die aneinander anliegenden Teile neigen ebenfalls zum Klappern, da die Federvorspannung nicht so groß sein darf, daß es zu erhöhter Reibung oder gar zu einer Verklemmung bei Wärmeausdehnung kommt. Bei einer wie aus der DE-AS 24 09 938 bekannten Andruckvorrichtung ist der Gesamtaufbau aufwendig, so daß das Zahnradgetriebe insgesamt kostenintensiv ist.

Ausgehend von diesem Stand der Technik liegt der vorliegenden Erfindung die **Aufgabe** zugrunde, ein Zahnstangengetriebe anzugeben, welches wirtschaftlich und einfach aufgebaut ist, nicht zum Klappern neigt und eine verbesserte Abdichtung bei einer gleichzeitigen Vereinfachung des Gehäuseaufbaus gewährleistet.

Zur technischen **Lösung** dieser Aufgabe wird ein Zahnstangengetriebe der gattungsgemäßen Art vorgeschlagen, wobei das Keillagerelement im wesentlichen hülsenförmig ausgebildet ist und zwei axial hintereinanderliegende und exzentrisch zueinander ausgebildete Hütsenabschnitte aufweist.

Das erfindungsgemäße Zahnstangengetriebe läßt sich sehr einfach aufbauen und einstellen, wobei das Keillagerelement ohne weitere Hilfsmittel ortsfest fixiert werden kann. Dadurch, daß ein Hülsenabschnitt in einer exzentrischen Erweiterung angeordnet ist, läßt sich dieser Bereich in Axialrichtung fixieren, so daß auch ein Verdrehen nicht mehr möglich ist. Das erfindungsgemäße Zahnstangengetriebe erfordert keine wie aus dem Stand der Technik bekannten Radialtopferweiterungen und auch keine zusätzlichen Federelemente. Die Abdichtung des Gehäuses erfolgt nur noch an den herkömmlichen Stellen, beispielsweise an den axialen Enden, und durch die Verwendung eines Keillagerelementes ohne Feder wird ein Klappern vermieden.

Mit Vorteil wird vorgeschlagen, daß die wenigstens zwei axial hintereinanderliegenden und exzentrisch zueinander ausgebildeten Hülsenabschnitte einen unterschiedlichen Durchmesser aufweisen. Dies verbessert die Positionierung und Fixierung des Keillagerelementes im Zahnstangengetriebe.

Gemäß einem weiteren vorteilhaften Vorschlag ist der Hülsenabschnitt mit dem kleineren Durchmesser länger als der andere. Der Hülsenabschnitt mit dem größeren Durchmesser ist zum Einsetzen in die exzentrische Erweiterung der Bohrung vorgesehen, so daß der andere Hülsenabschnitt mit dem kleineren Durchmesser in die für die Zahnstange vorgesehene Gehäusebohrung ragt.

In vorteilhafter Weise hat einer der Hülsenabschnitte über den Umfang gesehen unterschiedliche Wandstärken. Damit wird ein im wesentlichen sichelförmiges Keilelement gebildet, so daß dessen Verdrehen eine Verspannung der Zahnstange ermöglicht.

Mit Vorteil wird weiterhin vorgeschlagen, daß in wenigstens einem der Hülsenabschnitte eine axial verlaufende Kehle ausgebildet ist. Diese Kehle verringert die Auflagerfläche zwischen Zahnstange und Keillagerelement mit dem zwangsläufigen Vorteilen für die Getriebedynamik, beispielsweise den definierten Kontaktflächen mit der Zahnstange mit dem Ziel der optimalen Führung, vorzugsweise einer sogenannten Schwalbenschwanzführung.

Mit Vorteil wird weiterhin vorgeschlagen, daß in wenigstens einem der Hülsenabschnitte Schmiermittelsenken ausgebildet sind, so daß der Ablauf zwischen Zahnstange und Keillagerelement verbessert wird.

In vorteilhafter Weise ist der keilförmige Hülsenabschnitt segmentiert. Dies erfolgt beispielsweise durch Schlitzen.

In besonders vorteilhafter Weise sind die Hülsenabschnitte derart segmentiert, daß das Keillagerelement mehrteilig ausgestaltet ist. So kann beispielsweise der keilförmige Hülsenabschnitt in ein einen Rahmen bereitstellendes Hülsenelement eingesetzt sein. Die einzelnen Segmentanteile können aus unterschiedlichen Werkstoffen gebildet sein oder Elemente aufweisen, so daß beispielsweise wenigstens Segmentanteile federelastisch ausgebildet sind.

In besonders vorteilhafter Weise wird vorgeschlagen, daß der in die Zahnstangenbohrung ragende Hülsenabschnitt über seine volle axiale Länge offen ausgebildet ist, also nur als Rinne vorliegt.

Schließlich wird mit der Erfindung vorgeschlagen, daß der in die Zahnstangenbohrung ragende Hülsenabschnitt federelastisch ausgebildet ist.

Mit der Erfindung wird ein einfach aufgebautes, leicht montier- und abdichtbares, einstellbares und nur wenige Bauteile erforderndes Zahnstangengetriebe bereitgestellt.

Nachfolgend wird ein Ausführungsbeispiel der Erfindung anhand der Figuren beschrieben. Dabei zeigen:
- Figur 1: eine schematische teilgeschnittene Seitenansicht eines Ausführungsbeispiels eines Zahnstangengetriebes;
- Figur 2: eine Ansicht des Getriebes gemäß Figur 1 von vorn;
- Figur 3: eine Seitenansicht eines Ausführungsbeispiels für ein Lagerelement;
- Figur 4: eine Stirnansicht auf das Lagerelement gemäß Figur 3;
- Figur 5: eine Schnittansicht entlang der Linie V-V in Figur 4;
- Figur 6a und Figur 6b: eine Schnittansicht entlang der Linie VI-VI gemäß Figur 5 mit Zahnstange und
- Figur 7: eine perspektivische Ansicht des Keillagerelementes gemäß Figur 3.

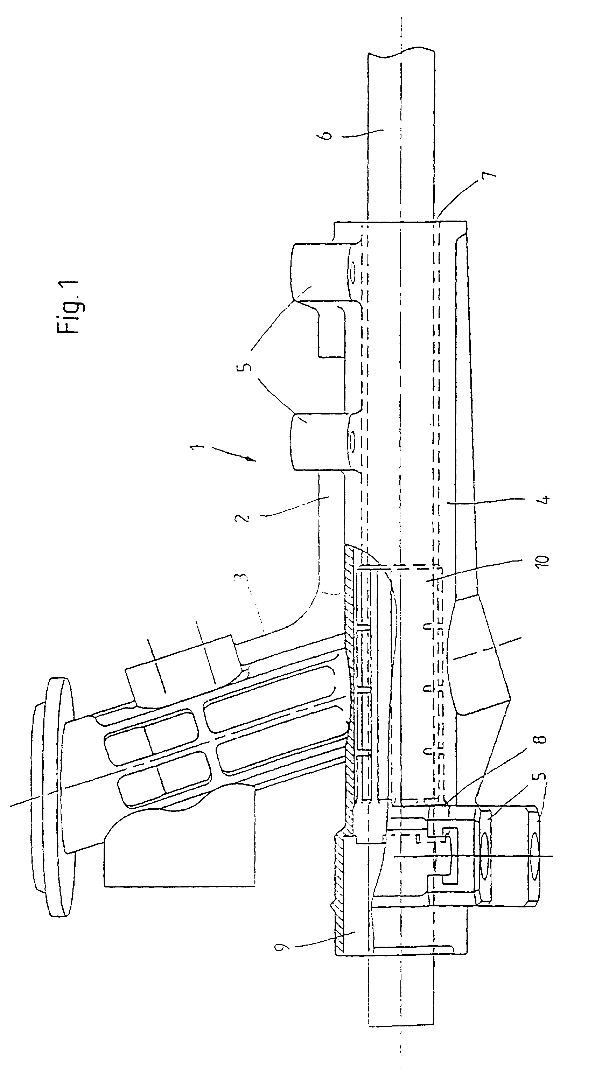

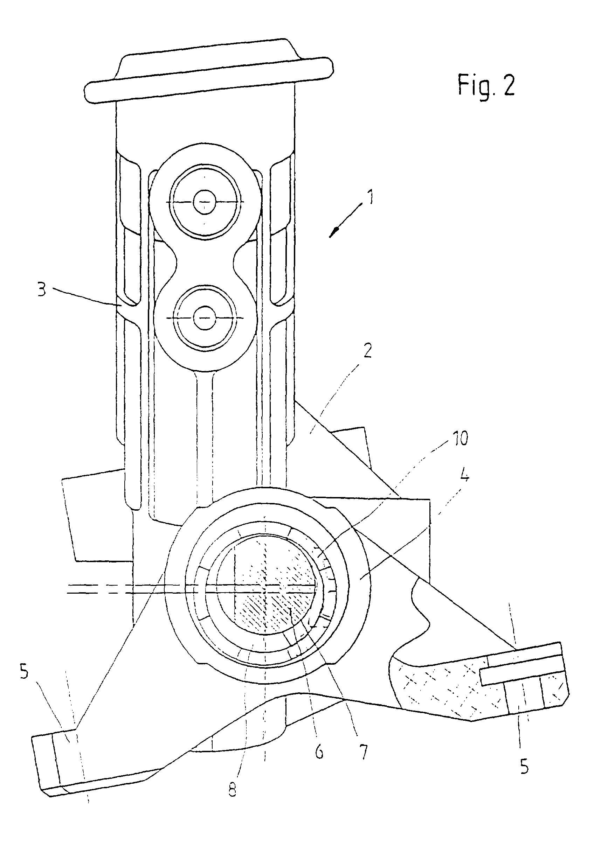

Bei dem in den Figuren 1 und 2 gezeigten Zahnstangengetriebe 1 besteht das Gehäuse 2 aus einem Ritzelgehäusebereich 3 und einem Zahnstangengehäusebereich 4. Das Gehäuse weist Befestigungsstellen 5 auf, um beispielsweise in einem Fahrzeug befestigt zu werden. Eine Zahnstange 6 ist im Zahnstangengehäusebereich 4 geführt und ragt auf beiden Seiten des Zahnstangengetriebes 1 heraus, um hier beispielsweise mit Steuerstangen einer Fahrzeuglenkung verbunden zu werden. Das Ritzel wird an seinem freien Ende mit einer Lenkstange verbunden. Soweit ist die beschriebene Ausführungsform Stand der Technik. Die Zahnstange 6 läuft in einer Bohrung 7 im Zahnstangengehäusebereich 4. Die Bohrung 7 weist auf einer Seite eine exzentrische Erweiterung auf. Dabei handelt es sich um eine zur Längsmittelachse der Bohrung 7 exzentrisch ausgeführten Bohrung mit gegenüber dem Durchmesser der Bohrung 7 vergrößertem Durchmesser. An diesem gehäuseseitigen Ende ist ein Verschluß 9 ausgebildet, so daß das Gehäuse auf dieser Seite hydraulikdicht schmutzgeschützt verschlossen werden kann.

In die Bohrungen 7 und 8 ist ein Keillagerelement 10 eingesetzt, welches die Zahnstange zumindest teilweise umfaßt.

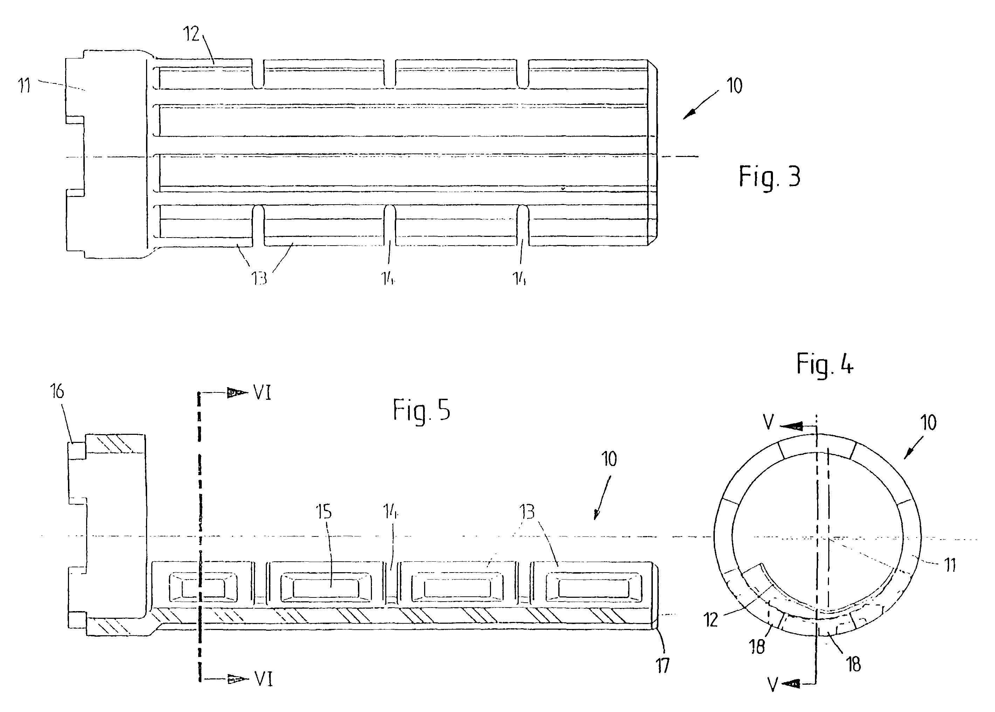

In den Figuren 3 bis 7 ist ein Ausführungsbeispiel für ein Keillagerelement 10 detailliert gezeigt. Dieses umfaßt einen ersten Hülsenabschnitt 11 und einen zweiten Hülsenabschnitt 12. Der zweite Hülsenabschnitt 12 hat einen gegenüber dem Hülsenabschnitt 11 verringerten Durchmesser und beide Hülsenabschnitte 11 und 12 sind exzentrisch zueinander positioniert. Der Hülsenabschnitt 12, welcher in die Bohrung 7 eingeschoben wird, besteht aus Segmenten 13, die durch die Erzeugung von Querschlitzen 14 gebildet sind. Innerhalb der Segmente sind zur Verbesserung der Gleiteigenschaften und zur Schmiermittelführung Öffnungen 15 ausgebildet.

Der Hülsenabschnitt 11 weist an seiner freien Stirnseite einen Stirnring 16 auf, der aus zinnenartigen Teilelementen besteht, so daß das Keillagerelement 10 um die Mittelachse drehbar ist.

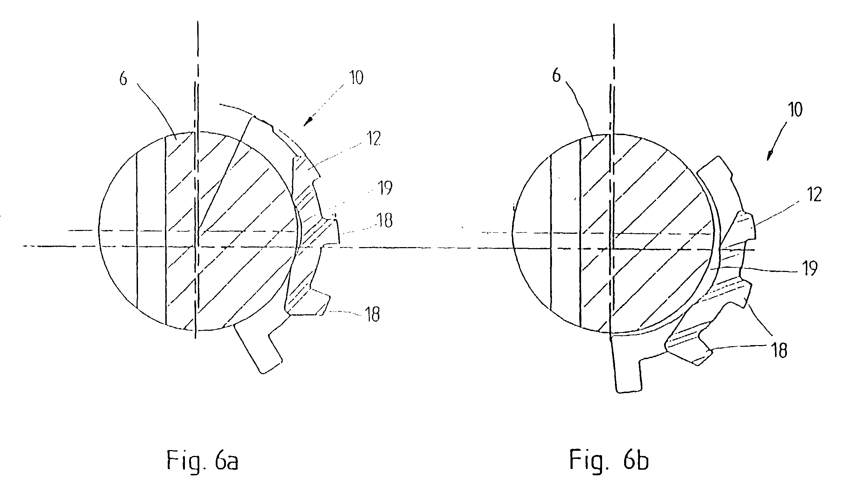

Wie die Figuren 4 und 6 zeigen, sind an dem Hülsenabschnitt 12, der an seiner freien Stirnkante eine Fase 17 aufweist, Rippen 18 ausgebildet, deren Höhe über den Umfang zunimmt. Durch ein Drehen des Keillagerelementes 10 wird somit die im Hülsenabschnitt 12 ruhende Zahnstange belastet bzw. entlastet. Dieser Vorgang ist in den Figuren 6a und 6b gezeigt, wobei Figur 6a die verspannte Position zeigt, während Figur 6b die Einbauposition zeigt. Die Figuren zeigen weiterhin, daß der Hülsenabschnitt 12 als Rinne axial offen ausgebildet ist und seinerseits parallel zur Längsmittellinie eine an der Innenwandung ausgearbeitete, axial verlaufende Kehle 19 aufweist.

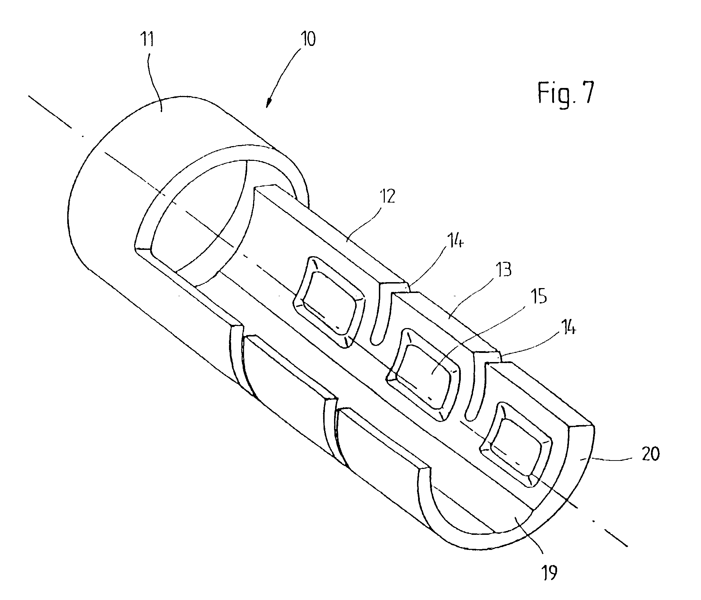

Insbesondere in Figur 7 ist im Bereich der Stirnfläche 20 zu erkennen, daß der Hülsenabschnitt 12 über den Umfang eine zunehmende Wandstärke aufweist.

Wesentlich für die vorliegende Erfindung ist, daß die Kontaktflächen einen geringen Reibungskoeffizienten aufweisen. Im übrigen ist die Materialwahl für das Keillagerelement nur von den Randbedingungen des Arbeitsbereiches abhängig. So kann das Keillagerelement beispielsweise vollständig aus Kunststoff gebildet sein, oder es kann auch eine Aluminiumhülse sein, die an den Kontaktflächen mit reibungsverminderten Schichten versehen ist.

Das gezeigte Keillagerelement wird, wie in Figuren 1 und 2 gezeigt, in das Gehäuse 2 des Zahnstangengetriebes 1 eingeschoben, durch Drehen so verstellt, daß die Zahnstange optimal gegen das Ritzel gelagert wird, und durch Aufbringen eines Verschlusses, beispielsweise axialen Einspressungen in Bohrung 8, in dieser Position fixiert.

### Bezugszeichenliste:

- 1: Zahnstangengetriebe
- 2: Gehäuse
- 3: Ritzelgehäusebereich
- 4: Zahnstangengehäusebereich
- 5: Befestigungsstellen
- 6: Zahnstange
- 7: Bohrung
- 8: Exzentererweiterung
- 9: Verschluß
- 10: Keillagerelement
- 11: Hülsenabschnitt
- 12: Hülsenabschnitt
- 13: Segmente
- 14: Schlitze
- 15: Öffnung
- 16: Stirnring
- 17: Fase
- 18: Rippen
- 19: Kehle
- 20: Stirnfläche

## Patentansprüche

1. Zahnstangengetriebe mit einem Getriebegehäuse, in welchem in einer Bohrung eine durch ein in einem Ritzelgehäusebereich (3) angeordnetes Ritzel beaufschlagte Zahnstange (6) geführt ist, wobei die Bohrung (7) im Eingriffsbereich von Ritzel und Zahnstange exzentrisch erweitert ist und ein Keillagerelement (10) in den Eingriffsbereich eingesetzt ist, **dadurch gekennzeichnet,**
**daß** das Keillagerelement (10) im wesentlichen hülsenförmig ausgebildet ist und zwei axial hintereinanderliegende und exzentrisch zueinander ausgebildete Hülsenabschnitte (11, 12) aufweist.

2. Zahnstangengetriebe nach Anspruch 1, **dadurch gekennzeichnet, daß** die beiden Hülsenabschnitte (11, 12) unterschiedliche Durchmesser aufweisen.

3. Zahnstangengetriebe nach Anspruch 2, **dadurch gekennzeichnet, daß** der Hülsenabschnitt (12) mit dem kleineren Durchmesser länger ist als der andere Hülsenabschnitt (11).

4. Zahnstangengetriebe nach einem der vorhergehenden Ansprüche, **dadurch gekennzeichnet, daß** einer der Hülsenabschnitte über den Umfang unterschiedliche Wandstärken aufweist.

5. Zahnstangengetriebe nach einem der vorhergehenden Ansprüche, **dadurch gekennzeichnet, daß** in wenigstens einem der Hülsenabschnitte eine axial verlaufende Kehle (19) ausgebildet ist.

6. Zahnstangengetriebe nach einem der vorhergehenden Ansprüche, **dadurch gekennzeichnet, daß** in wenigstens einem der Hülsenabschnitte Schmiermittelsenken ausgebildet sind.

7. Zahnstangengetriebe nach einem der vorhergehenden Ansprüche, **dadurch gekennzeichnet, daß** wenigstens einer der Hülsenabschnitte segmentiert ist.

8. Zahnstangengetriebe nach Anspruch 7, **dadurch gekennzeichnet, daß** die Segmente (13) durch die Ausbildung von quer verlaufenden Schlitzen (14) ausgebildet sind.

9. Zahnstangengetriebe nach einem der vorhergehenden Ansprüche, **dadurch gekennzeichnet, daß** einer der Hülsenabschnitte (12) über die gesamte axiale Länge offen ausgebildet ist.

10. Zahnstangengetriebe nach einem der vorhergehenden Ansprüche, **dadurch gekennzeichnet, daß** wenigstens einer der Hülsenabschnitte federelastisch ausgebildet ist.

## Claims

1. Rack-and-pinion gear comprising a gear case, in which a toothed rack (6), which is acted upon by a pinion disposed in a pinion housing region (3), is guided in a bore, wherein the bore (7) is eccentrically widened in the region of engagement of pinion and toothed rack and a fluidfilm bearing element (10) is inserted into the region of engagement,
**characterized in**
**that** the fluidfilm bearing element (10) is of a substantially sleeve-shaped design and comprises two sleeve portions (11, 12), which lie one axially behind the other and are constructed eccentrically relative to one another.

2. Rack-and-pinion gear according to claim 1,
**characterized in that** the two sleeve portions (11, 12) have different diameters.

3. Rack-and-pinion gear according to claim 2,
**characterized in that** the sleeve portion (12) having the smaller diameter is longer than the other sleeve portion (11).

4. Rack-and-pinion gear according to one of the preceding claims, **characterized in that** one of the sleeve portions has wall thicknesses, which differ over the periphery.

5. Rack-and-pinion gear according to one of the preceding claims, **characterized in that** an axially extending groove (19) is formed in at least one of the sleeve portions.

6. Rack-and-pinion gear according to one of the preceding claims, **characterized in that** lubricant hollows are formed in at least one of the sleeve portions.

7. Rack-and-pinion gear according to one of the preceding claims, **characterized in that** at least one of the sleeve portions is segmented.

8. Rack-and-pinion gear according to claim 7,
**characterized in that** the segments (13) are formed by the formation of transversely extending slots (14).

9. Rack-and-pinion gear according to one of the preceding claims, **characterized in that** one of the sleeve portions (12) is open over its entire axial length.

10. Rack-and-pinion gear according to one of the preceding claims, **characterized in that** at least one of the sleeve portions is of a resilient design.

## Revendications

1. Engrenage à crémaillère comprenant un carter de protection des engrenages, dans lequel, à travers une forure, passe une crémaillère (6) sollicitée par un pignon disposé dans une zone avec boîtier de protection des pignons (3), sachant que la forure (7) est élargie excentriquement dans la zone de prise du pignon et de la crémaillère et un élément de palier prismatique (10) est inséré dans la zone de prise, **caractérisé en ce que** l'élément de palier prismatique (10) est conçu sensiblement en forme de gaine et comporte deux parties de gaine (11, 12) disposées l'une derrière l'autre dans le sens axial et excentrées l'une par rapport à l'autre.

2. Engrenage à crémaillère selon la revendication 1, **caractérisé en ce que** les deux parties de gaine (11, 12) ont des diamètres différents.

3. Engrenage à crémaillère selon la revendication 2, **caractérisé en ce que** la partie de gaine (12), avec le plus petit diamètre, est plus longue que l'autre partie de gaine (11).

4. Engrenage à crémaillère selon l'une des revendications précédentes, **caractérisé en ce que** l'une des parties de gaine comporte sur sa périphérie différentes épaisseurs de paroi.

5. Engrenage à crémaillère selon l'une des revendications précédentes, **caractérisé en ce qu'**une gorge (19), orientée dans le sens axial, est réalisée dans l'une au moins des parties de gaine.

6. Engrenage à crémaillère selon l'une des revendications précédentes, **caractérisé en ce que** des cavités pour lubrifiant sont réalisées dans au moins une des parties de gaine.

7. Engrenage à crémaillère selon l'une des revendications précédentes, **caractérisé en ce qu'**au moins une des parties de gaine est divisée en segments.

8. Engrenage à crémaillère selon la revendication 7, **caractérisé en ce que** les segments (13) sont formés par la réalisation de fentes (14) orientées dans le sens transversal.

9. Engrenage à crémaillère selon l'une des revendications précédentes, **caractérisé en ce que** l'une des parties de gaine (12) est conçue avec une ouverture s'étendant sur toute la longueur axiale.

10. Engrenage à crémaillère selon l'une des revendications précédentes, **caractérisé en ce qu'**au moins une des parties de gaine forme une gaine à déformation élastique.
